# EUROPEAN PATENT SPECIFICATION

(11) **EP 2 032 349 B1**
(45) Date of publication and mention of the grant of the patent: **27.02.2013**
(21) Application number: 06779796.9
(22) Date of filing: 29.06.2006
(51) Int. Cl.: B29D 30/16

(54) **PROCESS FOR MANUFACTURING TYRES FOR VEHICLE WHEELS**
VERFAHREN ZUR HERSTELLUNG VON REIFEN FÜR FAHRZEUGRÄDER
PROCESSUS DE FABRICATION DE PNEUS POUR ROUES DE VÉHICULES

(43) Date of publication of application: 11.03.2009
(73) Proprietor: Pirelli Tyre S.p.A., 20126 Milano (IT)
(72) Inventor: MARCHINI, Maurizio, I-20126 Milano (IT); MARIANI, Fiorenzo, I-20126 Milano (IT); AZZARETTO, Riccardo, I-20126 Milano (IT); SANGIOVANNI, Stefano, I-20126 Milano (IT)
(74) Representative: Castiglia, Paolo
(86) International application number: PCT/IB2006/001783
(87) International publication number: WO 2008/001152

(56) References cited:
- EP-A- 0 340 146
- EP-A- 1 666 236
- EP-A2- 0 340 147
- EP-A2- 1 142 695
- JP-A- 8 025 512
- JP-A- 2001 260 250
- JP-A- 2004 066 568
- US-B1- 6 318 432

## Description

The present invention relates to a process for manufacturing tyres for vehicle wheels.

The invention also relates to an apparatus for the deposition of at least one reinforcing element on a toroidal support, said apparatus being able to be used to carry out the aforementioned process.

In the present description and in the subsequent claims, the term "reinforcing element" is used to indicate an element comprising one or more thread-like reinforcing elements, such as textile or metallic cords, incorporated in, or coated with, a layer of elastomeric material.

It should also be specified that, in the present description and in the subsequent claims, the term: elastomeric material, is used to indicate a composition comprising at least one elastomeric polymer and at least one reinforcing filler. Preferably, such a composition also comprises additives like, for example, a cross-linking agent and/or a plasticiser. Thanks to the provision of the cross-linking agent, such a material can be cross-linked through heating, so as to form the final product.

A tyre for vehicle wheels generally comprises a carcass structure comprising at least one carcass ply formed from reinforcing cords incorporated in an elastomeric matrix. The carcass ply has end edges respectively engaged with annular anchoring structures, arranged in the areas usually identified with the name "beads" and normally each formed from a substantially circumferential annular insert on which at least one filling insert is applied, in a radially outer position thereof. Such annular structures are commonly referred to as "beads cores" and have the task of keeping the tyre well fixed to the anchoring seat specifically provided in the rim of the wheel, thus avoiding in operation the radially inner end edge of the tyre coming out from such a seat.

At the beads specific reinforcing structures can be provided having the function of improving the torque transmission to the tyre. The region of the beads, indeed, is particularly active in the torque transmission from the rim to the tyre when accelerating and when braking and, therefore, the provision of appropriate reinforcing structures in this area ensures that the torque transmission occurs with the maximum possible reactivity.

In a radially outer position with respect to the carcass ply a belt structure comprising one or more belt layers is associated, said belt layers being arranged radially one on top of the another and having textile or metallic reinforcement cords with crossed orientation and/or substantially parallel to the direction of circumferential extension of the tyre.

Between the carcass structure and the belt structure a layer of elastomeric material can be provided, known as "under-belt", having the function of making the radially outer surface of the carcass structure as uniform as possible for the subsequent application of the belt structure.

In a radially outer position with respect to the belt structure a tread band is applied, also made from elastomeric material like other structural elements making up the tyre.

Between the tread band and the belt structure a so-called "under-layer" of elastomeric material can be arranged, said layer having properties suitable to ensure a steady union of the tread band itself.

On the side surfaces of the carcass structure respective sidewalls of elastomeric material are also applied, each extending from one of the side edges of the tread band up to the respective annular anchoring structure to the beads.

Conventional manufacturing processes of tyres for vehicle wheels essentially provide for the components of the tyre listed above to be firstly made separately from each other, to then be assembled in a subsequent building step of the tyre.

Nevertheless the current tendency is that of using manufacturing processes that allow the production and storage of semi-finished products to be minimised, or possibly eliminated.

More specifically, attention has now turned towards process solutions that allow the individual components of the tyre to be made by directly applying them, according to a predetermined sequence, onto the tyre being built on a forming support, typically toroidal or cylindrical.

For example, in document WO 01/36185 to the same Applicant, the components of the tyre are made on a toroidal support by sequentially depositing a plurality of reinforcing elements thereon, the reinforcing elements consisting for example of individual rubberised cords or of rubberised cords grouped in parallel in the form of strip-like elements, particularly used in making the carcass and belt structure, and of continuous elongate elements in elastomeric material, particularly used for making the other structural components of the tyre, such as for example tread band, sidewalls, liners, fillers.

Document US 6,355,126 describes for example a method and an apparatus for making a belt layer through deposition on a suitably positioned forming support of band-like pieces cut from a continuous band-like element. The band-like pieces, once cut from the continuous band-like element, are picked up through gripping means and moved to the forming support for deposition.

In EP 1 418 043 A2 a method and an apparatus for forming an annular elastomeric component of a tyre, in particular an insert for filling the beads, are described. The described method comprises an annular extrusion step of elastomeric material on a forming support and a modelling step, through the action of a modelling extruder on the surface of the forming support, of the material deposited to obtain the desired profile for the component.

In US 6,379,493 B1 a device for the transportation and deposition onto a forming support of a tyre of cut to size pieces of elastomeric material is described, said pieces being in particular intended to form inserts for filling the beads. The device comprises rotatable gripping devices which are movable along a direction essentially tangential to the circumferential surface of the forming drum and allow each piece to be gripped and deposited in a predetermined position on the forming drum.

Document US 6318432 - A discloses the manufacture of reinforcing elements formed by depositing on a toroidal core rubberized thread-like elements in concentric coils disposed in mutual side by side relationship.

The thread-like elements extend parallel to the longitudinal direction of the reinforcing elements formed thereby.

Document EP 1666236 - A discloses the incorporation of a reinforcing element into the sidewall rubber.

Document EP 1142695 - A discloses the manufacture of a bead and sidewall reinforcing layer by spirally winding and laminating a rubber ribbon embedding short fibers.

Document JP 8025512 - A discloses the manufacture of a bead reinforcing layer by laminating two rubber strips containing parallel cords oriented at certain angles with respect to the longitudinal direction of the strips. The bead reinforcing layer is assembled on a tire building drum.

With particular reference to the region of the tyre defined at the bead, the Applicant has realised the importance of providing in this region a reinforcing structure, as described with reference to the tyre structure discussed above.

The Applicant has considered the problem of making and applying, on a substantially toroidal forming support, a reinforcing structure comprising one or more reinforcing element in the region of the bead of the tyre in a process for producing tyres for example of the type described in document WO 01/36185 previously mentioned.

The Applicant has verified the possibility of forming on a substantially toroidal forming support a reinforcing structure as described above by applying at least one reinforcing element on a substantially annular deposition region defined on said toroidal support, said deposition region for example being able to be defined at the region of the bead on a surface of the forming support that is not perfectly planar.

The Applicant has also verified the possibility of carrying out the aforementioned application while maintaining the maximum possible flexibility in terms of diameter and thickness of the reinforcing element and inclination of the thread-like reinforcing elements incorporated therein, ensuring high structural homogeneity along the direction of circumferential extension of the tyre and at the same time avoiding the formation of possible defects on the tyre, such as for example overlapping or undesired spaces in the reinforcing structure. This allows a deposition according to the design to be ensured and thus allows increasingly high quality and performance levels of the tyre to be ensured.

The Applicant has found that by depositing a reinforcing element deformed so that its shape substantially corresponds to the shape of the deposition region onto a toroidal forming support of a tyre, at a substantially annular deposition region, it is possible to obtain a tyre built substantially without defects in the region of the bead even with complex design geometries of the tyre itself.

The present invention therefore relates, in a first aspect thereof, to a process for manufacturing tyres for vehicle wheels, as recited in claim 1.

In the present description and in the subsequent claims, the expression "length of the deposition region" referred to a substantially annular deposition region indicates the length of the longitudinal development of such a region.

Advantageously, the process of the present invention, in a process for manufacturing tyres for example of the type described in document WO 01/36185, allows a reinforcing structure to be made that is substantially homogeneous and uniform, in particular circumferentially, at the bead region of the tyre. This is achieved by deforming the whole reinforcing element, previously provided with a length determined as a function of the length of the deposition region, so as to give it an annular shape substantially corresponding to that of the deposition region, and then depositing the deformed reinforcing element. Furthermore, this result is achieved substantially irrespective of the size of the deposition region, the width of the reinforcing element and the arrangement of thread-like reinforcing elements present inside the reinforcing element.

It is thus possible to make on a toroidal forming support a tyre reinforced at the bead region having high quality levels and, consequently, high performance.

In a preferred embodiment of the process of the invention, the step of providing the at least one reinforcing element comprises the steps of:
- cutting to size a piece from a continuous reinforcing band-like element fed along a predetermined feeding direction;
- approaching said piece to a previously cut piece along an approach direction inclined with respect to the feeding direction;
- joining said piece to the previously cut piece;
- repeating the cutting, approaching and joining steps until the at least one reinforcing element is given a length determined according to the length of the deposition region.

Advantageously, through the aforementioned steps it is possible to provide a reinforcing element having a desired inclination of the thread-like reinforcing elements within it and a desired length starting from a continuous reinforcing element comprising thread-like reinforcing elements oriented substantially parallel to the longitudinal extension thereof, as a continuous reinforcing element produced for example through drawing and/or calandering processes, known to the man skilled in the art, can be.

Preferably, in the aforementioned joining step a piece is joined to the previously cut piece at respective joining sides parallel to the feeding direction.

Preferably, the joining step comprises the step of partially overlapping the pieces at the respective joining sides.

Preferably, in the cutting step the piece is cut according to a cutting angle of between about 0° and about 70°.

More preferably, such a cutting angle is between about 20° and about 65°.

In alternative embodiments of the process of the invention, it is also possible for the aforementioned approaching and joining steps of the pieces, and possibly also the cutting to size step, to be left out, reinforcing elements being provided that have been previously prepared and are already suitable, as to their structure and possibly also to their length, for the subsequent deformation and deposition steps.

In a preferred embodiment of the process of the invention, the toroidal support has a rotation axis X-X and the step of deforming the at least one reinforcing element comprises the steps of:
- forming said annular reinforcing element closing the at least one reinforcing element in a loop around the rotation axis X-X so as to generate a substantially cylindrical surface, said substantially cylindrical surface lying on a first laying surface having, in a predetermined point thereof, a normal extending along a first direction;
- moving the substantially cylindrical surface from the first laying surface to a second laying surface having, in a point corresponding to said predetermined point on the first laying surface, a normal extending along a second direction inclined with respect to the first direction.

Advantageously, the deformation of the reinforcing element is thus achieved through a substantially geometric effect connected to the variation of the lying position of a reinforcing element, previously closed in a loop, as a whole. This type of deformation allows a high structural homogeneity to be obtained in the deformed reinforcing element, in particular as far as the final annular distribution of the reinforcing elements is concerned.

Preferably, the step of deforming the at least one reinforcing element further comprises, after the step of forming the annular reinforcing element and before the moving step, the step of changing the radial extension of the substantially cylindrical surface.

Preferably, the step of changing the radial extension of the substantially cylindrical surface comprises radially expanding such a substantially cylindrical surface.

Advantageously, through this step it is possible to adapt the annular reinforcing element to deposition regions having different diameters.

Preferably, on the first laying surface the substantially cylindrical surface is substantially coaxial with respect to the rotation axis X-X of the toroidal support.

Preferably, on the second laying surface the annular reinforcing element defines a substantially frusto-conical surface having a longitudinal axis coinciding with the longitudinal axis of the substantially cylindrical surface.

These characteristics advantageously allow a deformed annular reinforcing element to be obtained in a simple and accurate manner, said annular reinforcing element being ready to be deposited at a non-planar substantially annular deposition region, like that at the bead region of a tyre.

Preferably, the deposition step is carried out during the moving step.

This advantageously allows the overall time taken to carry out the deposition process to be reduced.

In a preferred embodiment of the process of the invention, it is also provided the step of passing a pressing member on the deposited annular reinforcing element.

Advantageously, this further step ensures that the deposited annular reinforcing element adheres perfectly and along the entire surface thereof to the underlying structures of the tyre being built.

Preferably, the deposition region is a substantially circular annular region with an inner radius of between about 200 mm and about 350 mm.

Preferably, the at least one reinforcing element has a width of between about 10 mm and about 50 mm.

Preferably, the at least one reinforcing element comprises at least one thread-like reinforcing element incorporated in an elastomeric material.

Preferably, at the end of the deposition step the at least one thread-like reinforcing element is orientated so as to form an angle greater than or equal to 0° and less than 90° with a radial direction passing through its own radially inner end.

In a second aspect thereof, the present invention refers to an apparatus for depositing on a toroidal support a reinforcing element of a tyre for vehicle wheels, as recited in claim 18.

Such an apparatus can advantageously be used to carry out the process of the present invention described above.

In a preferred embodiment of the apparatus of the invention, the at least one feeding device feeds a continuous reinforcing band-like element along to a predetermined feeding direction.

In this case, the apparatus of the invention preferably comprises at least one cutting device for cutting to size pieces of the continuous reinforcing band-like element.

The apparatus of the invention also preferably comprises at least one assembling device suitable for receiving such pieces and for allowing them to be joined together to obtain said reinforcing element.

Advantageously, the at least one cutting device and the at least one assembling device can cooperate with the feeding device, in the case in which it feeds a continuous reinforcing element, to form a reinforcing element from which the annular reinforcing element to be subsequently deformed and deposited is obtained.

In alternative embodiments, it is nevertheless possible for the at least one assembling device, and possibly also the at least one cutting device, to be left out. In these cases the at least one feeding device feeds reinforcing elements that have been previously prepared and are already suitable, as to their structure and possibly also to their length, for forming the annular reinforcing element.

Preferably, the at least one assembling device comprises a conveyor belt movable along a conveying direction and suitable for sequentially receiving the aforementioned pieces.

Preferably, the feeding direction of the at least one feeding device forms a feeding angle of more than 0° and less than 180° with such a conveying direction.

More preferably, such a feeding angle is equal to about 90°- α, where α is the cutting angle of the pieces from the continuous reinforcing band-like element.

Advantageously, this relative position between the at least one feeding device and the at least one assembling device allows a desired structure to be given, in a substantially automatic manner and with high flexibility, to the reinforcing element to be deposited, in particular as far as the arrangement and orientation of thread-like reinforcing elements provided therein are concerned.

In a preferred embodiment thereof, the at least one deposition device comprises a disc-shaped element rotatable about a respective longitudinal axis and is provided with said plurality of rotatable elements which can rotate about respective pin axes arranged around said rotation axis, each of said rotatable elements comprising a seat for receiving a portion of the annular reinforcing element and being able to take up a first operative position, wherein the receiving seat extends, with reference to said longitudinal axis, along a first direction, and a second operative position, wherein the receiving seat extends, with reference to said longitudinal axis, along a second direction inclined with respect to the first direction.

Advantageously, the rotatable elements, through rotation thereof, allow the deformation of the reinforcing element loaded on the deposition device to be obtained, moving such an element from the first laying surface to the second laying surface, as described above with reference to the process of the present invention.

Preferably, each of said pin axes is arranged at an axially inner edge of said receiving seat.

Preferably, the rotatable elements are circumferentially arranged around the longitudinal axis of the disc-shaped element and are radially movable with respect to such a longitudinal axis.

Advantageously, it is thus possible to vary the radial position of the rotatable elements to radially deform the annular reinforcing element and adapt it to deposition regions having different diameters.

Preferably, the rotatable elements comprise respective electromagnets.

Such electromagnets help in keeping the reinforcing element in position during the deformation and deposition step in the case where such an element comprises steel thread-like reinforcing elements.

Preferably, the at least one deposition device is movable with respect to the toroidal support along a direction substantially coinciding with a rotation axis of said toroidal support.

Preferably, the apparatus of the invention further comprises a pressing member suitable for exerting a pressure on the annular reinforcing element deposited on said toroidal support.

In a preferred embodiment thereof, the apparatus of the invention comprises two feeding devices and two deposition devices provided for substantially simultaneously depositing two respective annular reinforcement elements at two deposition regions defined on axially opposite sides of the toroidal support.

Preferably, in this case, the apparatus also comprises two of the aforementioned cutting devices and two of the aforementioned assembling devices. Preferred embodiments of the invention are defined in the dependent claims. Further characteristics and advantages of the present invention shall become clearer from the following detailed description of a preferred embodiment of an apparatus and of a process according to the present invention, made hereafter with reference to the attached drawings. In such drawings:
- figure 1 is a schematic top view of a deposition apparatus according to the invention;
- figure 2 is a partially sectional view in a generic radial plane of a tyre being built, that schematically shows a detail of a deposition device of the apparatus of figure 1 and action thereof according to the deposition process of the present invention;
- figure 3 is a schematic perspective view of the deposition device of the apparatus of figure 1 placed near to a toroidal forming support;
- figure 4 is a schematic perspective view with partially removed parts of a detail of the deposition device of figure 3;
- figure 5 is a schematic partially sectional side view of the deposition device of figure 3;
- figure 6 is a schematic top view with partially removed parts of the deposition device of figure 3.

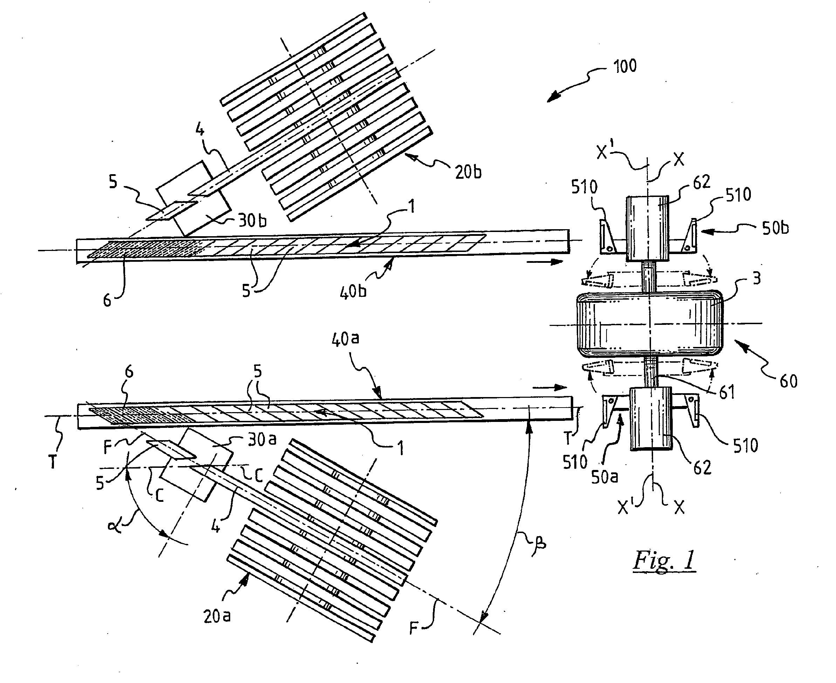

In figure 1, an exemplary embodiment of an apparatus for depositing reinforcing elements of vehicle tyres according to the present invention is wholly indicated with reference numeral 100.

The apparatus 100 can, for example, be part of a work station of the type described in document WO 01/36185 to the same Applicant.

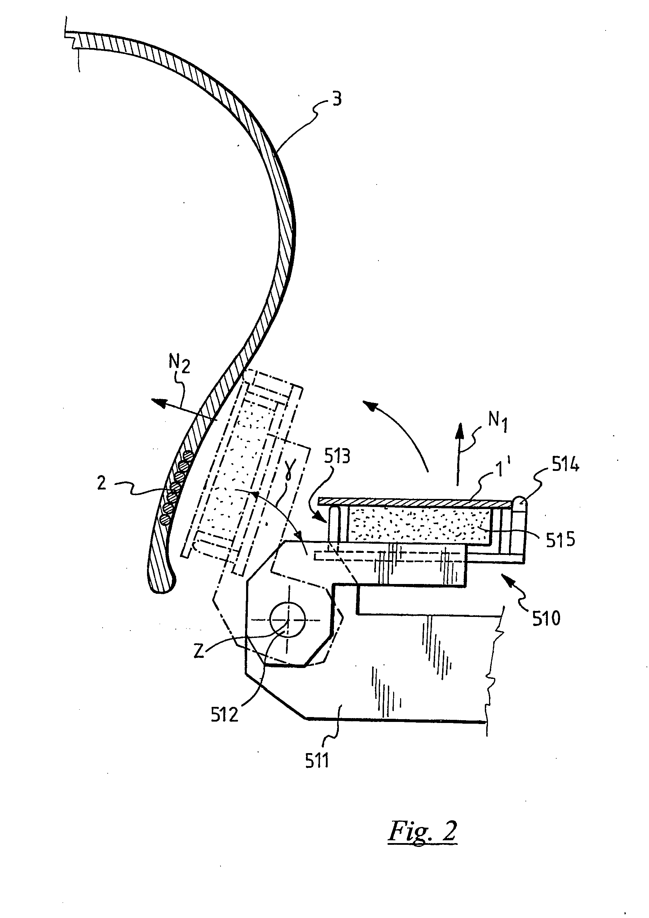

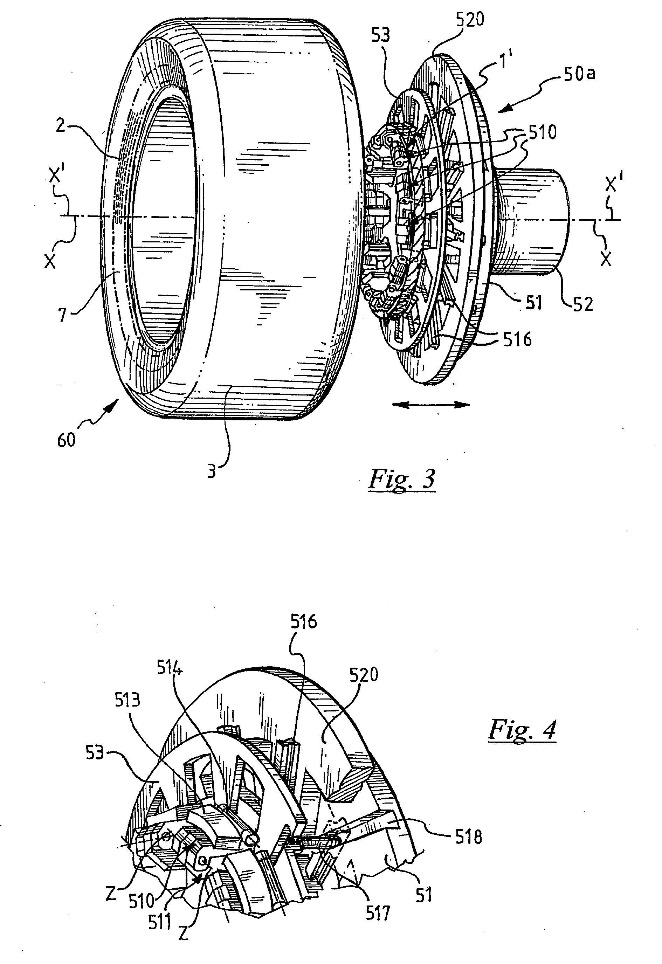

In the exemplary embodiment described, the apparatus 100 is suitable for making a reinforcing structure, operatively associated with annular anchoring structures 2 (only one of which is illustrated in figures 2 and 3) of a carcass structure 3 in the bead region of a tyre. The reinforcing structure comprises at least one annular reinforcing element 1' formed and deposited as described hereafter. The specific axial position of each annular reinforcing element 1' with respect to the annular anchoring structures 2 can vary according to the product's requirements; for example, the reinforcing structure can comprise a single annular reinforcing element 1' between two layers of annular anchoring structures 2, or else in axially outer position with respect to the annular anchoring structures 2. It is also possible to provide a reinforcing structure comprising many annular reinforcing elements 1' operatively associated, at different axial positions, with the annular anchoring structures 2.

The manufacturing of the reinforcing structure, as well as of the other components and structures of the tyre being built, is advantageously carried out on a toroidal support 60, having an outer surface configured substantially according to the inner configuration of the tyre to be made and not described here in detail, since it can be made in any convenient way by the man skilled in the art. During the manufacture of the reinforcing structure the toroidal support 60 preferably rests, through a support shaft 61 coaxial to a rotation axis X-X, on suitable fixed supports 62.

A reinforcing element 1 is preferably formed from pieces 5 of predetermined length, obtained through cutting operations sequentially carried out on at least one continuous reinforcing band-like element 4, and then suitably joined. From the reinforcing element 1 an annular reinforcing element 1' is then formed, which is then deposited at a predetermined substantially annular deposition region 7 defined on the toroidal support 60 (figure 3), as shall be described in detail hereafter, with reference to a preferred embodiment of the process of the invention.

In alternative embodiments, not described in detail here, a reinforcing element 1 ready for use can be provided, having the desired structure and length. In this case the apparatus 100 may not comprise devices specifically intended for the formation of the reinforcing element 1 from a continuous band-like element 4, as described later on, just as the process of the invention may not provide specific steps intended for the formation of the reinforcing element 1, by this meaning that such an element has been separately provided upstream of the deposition process, according to ways known to those skilled in the art.

The continuous band-like element 4 and, consequently, the pieces 5 and the reinforcing element 1 obtained from it, preferably comprise a plurality of thread-like reinforcing elements 6 (for the sake of clarity shown only in figure 1) made from metallic or textile material incorporated in a matrix of elastomeric material. Within the continuous band-like element 4 such thread-like reinforcing elements 6 extend parallel to each other, substantially along the direction of longitudinal extension of the continuous band-like element 4, whereas within the reinforcing element 1 the thread-like reinforcing elements 6 extend substantially parallel to each other, but obliquely with respect to the direction of longitudinal extension of the latter (figure 1), with an inclination determined by the specific ways of cutting and joining the pieces 5. In the present description and in the subsequent claims, the expression "direction of longitudinal extension" of the continuous band-like element 4 or of the reinforcing element 1 is used to indicate the line defining the longitudinal direction of such elements and passing through the middle point of one of the two shorter end sides.

The width of the reinforcing element 1 is preferably between about 10 mm and about 50 mm, wherein about 25 mm is a particularly preferred operative value.

As schematically represented in figure 1, the apparatus 100 comprises two feeding devices 20a, 20b suitable for feeding respective continuous band-like elements 4, two cutting devices 30a, 30b suitable for carrying out cutting to size operations on the continuous band-like elements 4 to make the pieces 5, two assembling devices 40a, 40b suitable for receiving the pieces 5 and for allowing them to be joined together to form respective reinforcing elements 1, and two deposition devices 50a, 50b suitable for receiving such reinforcing elements 1 and for depositing them on the toroidal support 60.

The pairs of feeding devices 20a, 20b, cutting devices 30a, 30b, assembling devices 40a, 40b and deposition devices 50a, 50b are identical to each other and are spatially arranged with respect to the toroidal support 60 so as to allow the formation and substantially simultaneous deposition of annular reinforcing elements 1' at both of the axially opposite bead regions of the tyre being built.

In the following description reference shall be made in particular to a one device for each of the aforementioned pairs, meaning that what said is also valid for the other, unless specifically indicated otherwise.

The feeding device 20a can be a feeding reel, as shown in figure 1, or another equivalent device known to those skilled in the art, such as a drawing and/or calandering device. The feeding device 20a feeds the continuous band-like element 4 according to a feeding direction F.

The assembling device 40a preferably comprises a conveyor belt movable along a conveying direction T towards the deposition device 50a. This conveyor belt sequentially receives the pieces 5 cut through the cutting device 30a so that they are arranged on it in a side-by-side relationship, so as to be able to make joins along sides parallel to the feeding direction F, in this way forming reinforcing elements 1 of predetermined length.

According to the invention, the deposition device 50a, as well as for receiving the reinforcing elements 1, is suitable for deforming such elements into annular reinforcing elements 1' before deposition, to adapt them to the shape of the deposition region 7.

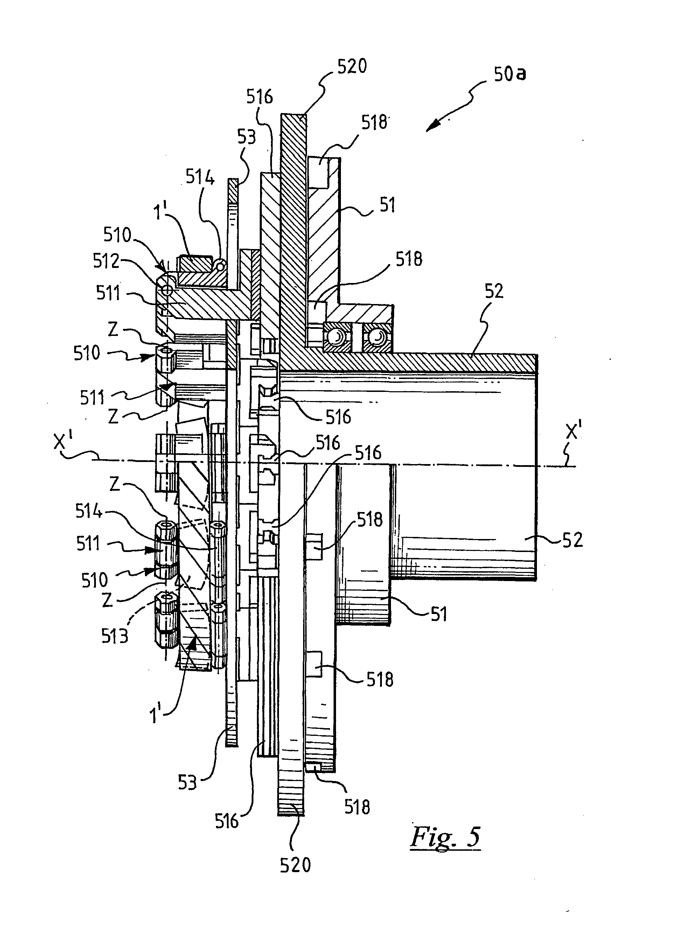

As shown in particular in figures 3 and 5, the deposition device 50a comprises a main body essentially consisting of a disc-shaped element 51 rotatably associated with a substantially cylindrical support element 52 provided, at a free end thereof on which the disc-shaped element 51 is mounted, with a flange 520. The disc-shaped element 51 and the support element 52 are coaxial with respect to a longitudinal axis X'-X'.

A plurality of rotatable elements 510 is associated with the disc-shaped element 51 through respective support groups 511, which extend vertically in a substantially axial direction from a face of such a disc-shaped element 51. The rotatable elements 510 are associated with the support groups 511 through pins 512, which define pin axes Z-Z about which the rotation of the rotatable elements 510 can take place. The support groups 511 and the pin axes Z-Z are arrange substantially circumferentially around the longitudinal axis X'-X'.

Each rotatable element 510 comprises a respective receiving seat 513 suitable for receiving a portion of the reinforcing element 1, which, once loaded on the deposition device 50a, defines an annular reinforcing element 1'. The pin axes Z-Z extend at the axially inner edge of each receiving seat 513, whereas at the axially outer edge an abutment 514 is preferably formed for the annular reinforcing element 1'. In the present description and in the subsequent claims, the expressions "axially inner" and "axially outer" relative to components or parts of the deposition device 50a refer to the operative position of the deposition device 50a in the proximity of the toroidal support 60 upon deposition (figures 2 and 3).

Each rotatable element 510 comprises, at the receiving seat 513, an electromagnet 515, which in particular helps in keeping the annular reinforcing element 1' in position during the deformation and deposition steps, in the case where it comprises steel thread-like reinforcing elements 6.

As can be seen in particular in figure 2, each of the rotatable elements 510 can rotate about the respective pin axis Z-Z between a first operative position and a second operative position, determining through such a movement the deformation of the annular reinforcing element 1', as shall be described more clearly hereafter with reference to a preferred embodiment of the process of the invention. In particular, in the first operative position, corresponding to a rest configuration of the rotatable elements 510, the receiving seats 513 extend, with reference to the longitudinal axis X'-X', along a first direction, preferably substantially parallel to such an axis, whereas in the second operative position, corresponding to a rotated configuration, the receiving seats 513 extend, again with reference to said longitudinal axis X'-X', along a second direction inclined with respect to the first direction.

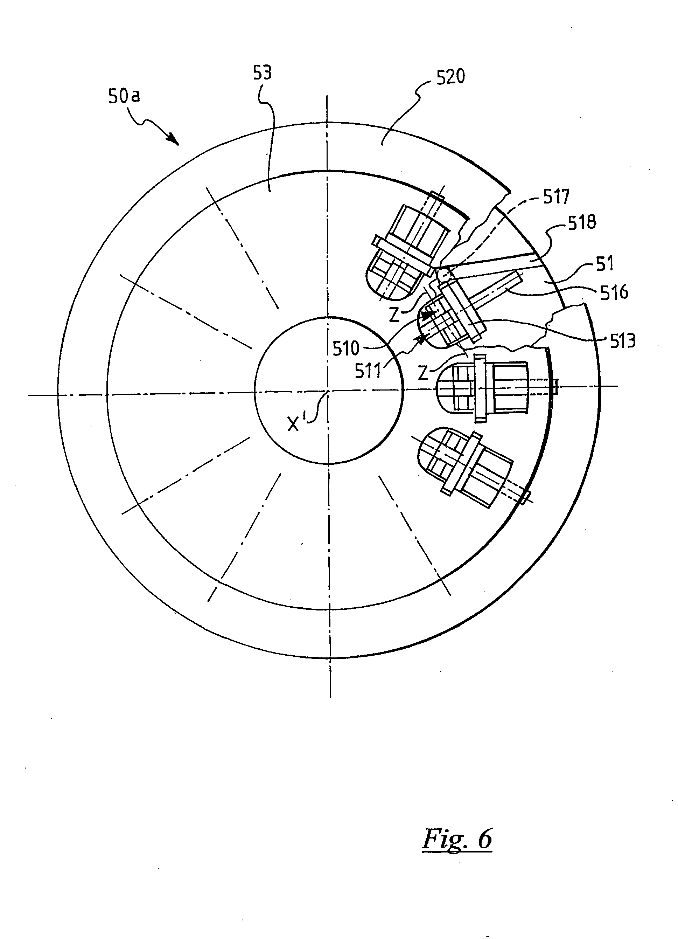

The support groups 511, and therefore the rotatable elements 510, are also radially movable with respect to the disc-shaped element 51, to allow a radial deformation of the annular reinforcing element 1'. The radial movement of the support groups 511 is achieved through a suitable displacing mechanism, which, in the embodiment described here, can be operated through rotation (figures 4, 5 and 6). Such a displacing mechanism comprises small shafts 517 extending parallel to the longitudinal axis X'-X' from each support group 511 and free to slide in respective grooves 518 formed on a face of the disc-shaped element 51. The grooves 518 extend from the centre towards the periphery of the disc-shaped element 51 inclined by a predetermined angle with respect to the radial direction. In this way, a lateral thrust given to each support group 511 through the rotation of an actuation disc 53 operatively associated with the support groups 511 can determine a movement in the radial direction of such support groups 511 with respect to the disc-shaped element 51. The correct radial alignment of each support group 511 during movement is ensured by radial guides 516, which are fixed to the disc-shaped element 51 at radially inner ends thereof and rest upon the flange 520. The radial movement of the support groups 511 and therefore of the rotatable elements 510 allows the diameter of the annular reinforcing element 1' for deposition on the toroidal support 60 to be varied.

The deposition device 50a is globally movable towards and away from the toroidal support 60 along a direction substantially coinciding with the rotation axis X-X thereof, as shown in figures 1 and 3.

The deposition apparatus 100 preferably also comprises a conventional pressing member (not shown in the figures) known to the man skilled in the art, which can act upon the annular reinforcing element 1' once deposited, so as to ensure the complete adherence thereof to the underlying structures of the tyre being built.

With reference to figures 1, 2 and 3 a preferred embodiment of the deposition process of the invention that can be carried out through the deposition apparatus 100 described above shall now be described.

As stated above, through the preferred embodiment of the deposition apparatus 100 it is possible to simultaneously deposit two annular reinforcing elements 1' at respective substantially annular deposition regions 7 at the axially opposite bead regions of the tyre being built. Also in the description of the preferred embodiment of the process of the invention, for the sake of simplicity, reference shall be made to the deposition of the annular reinforcing element 1' on one of the two deposition regions 7, being understood that the steps described hereafter can be carried out simultaneously for deposition on the other deposition region 7 as well.

The deposition region 7 is substantially circular in shape, with the centre lying on the rotation axis X-X of the toroidal support 60 and the inner radius preferably between about 200 mm and about 350 mm.

In a first step of the process a reinforcing element 1 of predetermined length, determined as a function of the length of the deposition region 7, is provided. In the preferred embodiment described here, this is obtained by cutting to size pieces 5 from the continuous band-like element 4 and then suitably joining such pieces.

The continuous band-like element 4 is fed by the feeding device 20a according to the feeding direction F, substantially coinciding with the direction of longitudinal extension of the continuous band-like element 4, defined above. Each piece 5 is cut according to a cutting angle α of between about 0° and about 70°, more preferably between about 20° and about 65°, said cutting angle α being defined between the perpendicular to the direction of longitudinal extension and a cutting direction C.

The successively cut pieces 5 are then sequentially received by the assembling device 40a, having the form of a conveyor belt moving along the conveying direction T. The conveying direction T, which defines the direction along which the pieces 5 are arranged on the conveyor belt in side-by-side relationship, is inclined with respect to the feeding direction F. In particular, the feeding direction F forms a feeding angle β of more than 0° and less than 180° with the conveying direction T. Preferably, the feeding angle β is linked to the cutting angle α by the relationship β=90°- α. Typically, the cutting angle α and the feeding angle β are preset and remain constant during the entire deposition process.

At the same time as the deposition on the assembling device 40a, each piece 5 is joined to the previously deposited piece 5. The joining is carried out at adjacent sides parallel to the feeding direction F of adjacent pieces 5 and provides for partial overlapping of such sides, preferably limited to an edge portion consisting of just elastomeric material, i.e. wherein no thread-like reinforcing elements are present. Alternatively, the pieces 5 can also be joined end to end..

The cutting, approaching and joining steps of the pieces 5 are repeated a predetermined number of times, until the reinforcing element 1 is given the desired length.

In a subsequent step of the process, the reinforcing element 1 thus obtained is deformed so as to obtain the annular reinforcing element 1' with a shape substantially corresponding to the shape of the deposition region 7.

In particular, firstly the reinforcing element 1 is closed in a loop coaxially around the rotation axis X-X of the toroidal support 60 - i.e. around the longitudinal axis X'-X' of the deposition device 50a, substantially coinciding with the rotation axis X-X -, so as to form a substantially cylindrical surface defining the annular reinforcing element 1'. This is in practice carried out by winding the reinforcing element 1 onto the deposition device 50a at the receiving seats 513 of the rotatable elements 510, and by joining the end portions of the reinforcing element 1'. The group of receiving seats 513 defines a first laying surface of the annular reinforcing element 1' having, in a predetermined point, a normal N₁ extending along a first direction (figure 2). Considering that, as described above, in the operative rest position of the rotatable elements 510, the receiving seats 513 extend substantially parallel to the longitudinal axis X'-X', the direction of the normal N₁ is substantially perpendicular to this axis.

After the formation of the annular reinforcing element 1', the deformation step can comprise a radial expansion step of the annular reinforcing element 1', carried out through the radial displacement of the support groups 511 of the rotatable elements 510, as described above.

Then, the deformation step provides for the movement of the annular reinforcing element 1', possibly radially expanded, from said first laying surface to a second laying surface having, in a point corresponding to the aforementioned predetermined point on the first laying surface, a normal N₂ (figure 2) extending along a direction inclined with respect to the direction of the normal N₁. This is in practice carried out by moving the rotatable elements 510 from their operative rest configuration to the operative rotated configuration, wherein they define the second laying surface. In particular, the rotatable elements 510 are made to rotate about the respective pin axes Z-Z by an rotation angle γ preferably between about 35° and about 80°.

Passing from the first to the second laying surface the annular reinforcing element 1' is deformed by a geometric effect, thus forming a substantially frusto-conical surface coaxial with respect to the axes X'-X' and X-X.

In a subsequent step of the process, the annular reinforcing element 1' deformed as described, is deposited at the deposition region 7.

The deposition is preferably carried out at the end of the moving step of the annular reinforcing element 1', having positioned the deposition device 50a at a distance from the toroidal support 60 such that the rotatable elements 510 at the end of their rotation come into abutment against the toroidal support 60, so as to obtain an at least partial adherence of the annular reinforcing element 1' to the underlying structures.

In order to ensure complete adherence, a step of passing a pressing member (not shown) on the deposited annular reinforcing element 1' is also provided.

## Claims

1. Process for manufacturing tyres for vehicle wheels, comprising building, on a toroidal support (60), a carcass structure (3) comprising at least one carcass ply associated, at axially opposite end edges thereof, with annular anchoring structures (2);
wherein the step of building said carcass structure (3) comprises forming at least one reinforcing structure, operatively associated with said annular anchoring structures (2) through deposition on said toroidal support (60) of at least one reinforcing element at a deposition region (7) defined on said toroidal support (60);
wherein the deposition step of said at least one reinforcing element comprises in sequence the steps of:
- providing at least one reinforcing element (1) having a length determined as a function of the length of said deposition region (7), wherein said at least one reinforcing element comprises a plurality of thread-like reinforcing elements (6) incorporated in, or coated with, elastomeric material and extending obliquely with respect to a direction of longitudinal extension of the reinforcing element (1);
- deforming said at least one reinforcing element (1) to form an annular reinforcing element (1') having a shape substantially corresponding to the shape of said deposition region (7);
- depositing the annular reinforcing element (1') at said deposition region (7).

2. Process according to claim 1, wherein said step of providing said at least one reinforcing element (1) comprises the steps of:
- cutting to size a piece (5) from a continuous reinforcing band-like element (4) fed along a predetermined feeding direction (F);
- approaching said piece (5) to a previously cut piece (5) along an approach direction (T) inclined with respect to said feeding direction (F);
- joining said piece (5) to the previously cut piece (5);
- repeating said cutting, approaching and joining steps until said at least one reinforcing element (1) is given a length determined as a function of the length of said deposition region (7).

3. Process according to claim 2, wherein in said joining step said piece (5) is joined to the previously cut piece (5) at respective joining sides parallel to said feeding direction (F).

4. Process according to claim 3, wherein said joining step comprises the step of partially overlapping said pieces (5) at said respective joining sides.

5. Process according to any one of claims 2 to 4, wherein in said cutting step said piece (5) is cut according to a cutting angle (α) of between about 0° and about 70°.

6. Process according to claim 5, wherein said cutting angle (α) is between about 20° and about 65°.

7. Process according to any one of the previous claims, wherein said toroidal support (60) has a rotation axis X-X and said deformation step of said at least one reinforcing element (1) comprises the steps of:
- forming said annular reinforcing element (1') by closing said at least one reinforcing element (1) in a loop around said rotation axis X-X so as to generate a substantially cylindrical surface, said substantially cylindrical surface lying on a first laying surface having, in a predetermined point thereof, a normal (N₁) extending along a first direction;
- moving said substantially cylindrical surface from said first laying surface to a second laying surface having, in a point corresponding to said predetermined point on said first laying surface, a normal (N₂) extending along a second direction inclined with respect to said first direction.

8. Process according to claim 7, wherein the deformation step of said at least one reinforcing element (1) further comprises, after said step of forming said annular reinforcing element (1') and before said moving step, the step of changing the radial extension of said substantially cylindrical surface.

9. Process according to claim 8, wherein said step of changing the radial extension of said substantially cylindrical surface comprises radially expanding said substantially cylindrical surface.

10. Process according to any one of claims 7 to 9, wherein on said first laying surface said substantially cylindrical surface is substantially coaxial with respect to said rotation axis X-X.

11. Process according to claim 10, wherein on said second laying surface said annular reinforcing element (1') defines a substantially frusto-conical surface having a longitudinal axis coinciding with the longitudinal axis of said substantially cylindrical surface.

12. Process according to any one of claims 7 to 11, wherein said deposition step is carried out during said moving step.

13. Process according to any one of the previous claims, further comprising the step of passing a pressing member on said deposited annular reinforcing element (1').

14. Process according to any one of the previous claims, wherein said deposition region (7) is a substantially circular annular region with an inner radius of between about 200 mm and about 350 mm.

15. Process according to any one of the previous claims, wherein said at least one reinforcing element (1) has a width of between about 10 mm and about 50 mm.

16. Process according to any one of the previous claims, wherein said at least one reinforcing element (1) comprises at least one thread-like reinforcing element (6) incorporated in an elastomeric material.

17. Process according to claim 16, wherein at the end of said deposition step said at least one thread-like reinforcing element (6) is oriented so as to form an angle greater than or equal to 0° and less than 90° with a radial direction passing through its own radially inner end.

18. Apparatus (100) for depositing a reinforcing element of a tyre for vehicle wheels on a toroidal support (60), comprising:
- a toroidal support (60);
- at least one feeding device (20a, 20b) of a reinforcing element (1);
- at least one deposition device (50a, 50b) suitable for forming an annular reinforcing element (1') and for depositing said annular reinforcing element (1') at a deposition region (7) defined on said toroidal support (60);
wherein said at least one deposition device (50a, 50b) having a longitudinal axis (X'-X') substantially coinciding with a rotation axis (X-X) of said toroidal support and comprising a main body (51, 52) and at least one mobile element (510) associated with said main body (51, 52) and actuatable to deform said annular reinforcing element (1') so as to give it a shape substantially corresponding to the shape of said deposition region (7), wherein said at one mobile element (510) comprises a plurality of rotatable elements (510) arranged substantially circumferentially around said longitudinal axis (X'-X').

19. Apparatus (100) according to claim 18, wherein said at least one feeding device (20a, 20b) feeds a continuous reinforcing band-like element (4) along a predetermined feeding direction (F).

20. Apparatus (100) according to claim 19, comprising at least one cutting device (30a, 30b) for cutting to size pieces (5) of said continuous reinforcing band-like element (4) .

21. Apparatus (100) according to claim 20, comprising at least one assembling device (40a, 40b) suitable for receiving said pieces (5) and for allowing them to be joined together to obtain said reinforcing element (1).

22. Apparatus (100) according to claim 21, wherein said at least one assembling device (40a, 40b) comprises a conveyor belt movable along a conveying direction (T) and suitable for sequentially receiving said pieces (5).

23. Apparatus (100) according to claim 22, wherein said feeding direction (F) forms a feeding angle (β) of more than 0° and less than 180° with said conveying direction (T).

24. Apparatus (100) according to claim 23, wherein said feeding angle (β) is equal to about 90°- α, where a is the cutting angle of said pieces (5) from said continuous reinforcing band-like element (4).

25. Apparatus (100) according to any one of claims 18 to 24, wherein said at least one deposition device (50a, 50b) is movable with respect to said toroidal support (60) along a direction substantially coinciding with a rotation axis X-X of said toroidal support (60).

26. Apparatus (100) according to any one of claims 18 to 25, further comprising a pressing member suitable for exerting a pressure on said annular reinforcing element (1') deposited on said toroidal support (60).

27. Apparatus (100) according to any one of claims 18 to 26, comprising two feeding devices (20a, 20b) and two deposition devices (50a, 50b) provided for substantially simultaneously depositing two respective annular reinforcing elements (1') at two deposition regions (7) defined on axially opposite sides of said toroidal support (60).

## Patentansprüche

1. Verfahren zu Herstellung von Reifen für Fahrzeugräder, aufweisend das Ausbilden, an einer ringförmigen Abstützung (60), einer Karkassenstruktur (3) aufweisend zumindest eine Karkassenlage, die an axial gegenüberliegenden Endrändern davon ringförmigen Verankerungsstrukturen (2) zugeordnet ist;
wobei der Schritt des Ausbildens der Karkassenstruktur (3) aufweist zumindest das Ausbilden einer Verstärkungsstruktur, die betrieblich den ringförmigen Verankerungsstrukturen (2) zugeordnet ist, durch Ablagerung an der ringförmigen Abstützung (60) von zumindest einem Verstärkungselement an einem Ablagerungsbereich (7), der an der ringförmigen Abstützung (60) festgelegt ist;
wobei der Ablagerungsschritt des zumindest einen Verstärkungselementes der Reihe nach die Schritte aufweist:
- Vorsehen von zumindest einem Verstärkungselement (1) mit einer Länge, die als eine Funktion der Länge des Ablagerungsbereiches (7) ermittelt wird, wobei das zumindest eine Verstärkungselement eine Vielzahl an garnartigen Verstärkungselementen (6) aufweist, die in elastomeres Material eingeschlossen sind oder damit beschichtet sind und sich schräg in Bezug auf eine Richtung oder Längserstreckung des Verstärkungselementes (1) erstrecken;
- Deformieren von zumindest einem Verstärkungselement (1), um ein ringförmiges Verstärkungselement (1') mit einer Form auszubilden, die im Wesentlichen der Form des Ablagerungsbereiches (7) entspricht;
- Ablagern des ringförmigen Verstärkungselementes (1') an dem Ablagerungsbereich (7).

2. Verfahren nach Anspruch 1, bei dem der Schritt des Vorsehens des zumindest einen Verstärkungselementes (1) die Schritte aufweist:
- Zuschneiden eines Stücks (5) aus einem kontinuierlichen bandartigen Verstärkungselement (4), das entlang einer vorgegebenen Zuführrichtung (F) zugeführt wird;
- Annähern des Stücks (5) an ein vorher abgeschnittenes Stück (5) entlang einer Annäherungsrichtung (T), die in Bezug auf die Zuführrichtung (F) geneigt ist;
- Verbinden des Stücks (5) mit dem vorher abgeschnittenen Stück (5);
- Wiederholen der Schneide-, Annäherungs- und Verbindungsschritte bis das zumindest eine Verstärkungselement (1) eine Länge erhält, die als eine Funktion der Länge des Ablagerungsbereiches (7) ermittelt wird.

3. Verfahren nach Anspruch 2, bei dem in dem Verbindungsschritt das Stück (5) mit dem vorher abgeschnittenen Stück (5) an entsprechenden Verbindungsseiten parallel zu der Zuführrichtung (F) verbunden wird.

4. Verfahren nach Anspruch 3, bei dem der Verbindungsschritt den Schritt des teilweisen Überlappens der Stücke (5) an den entsprechenden Verbindungsseiten umfasst.

5. Verfahren nach einem der Ansprüche 2 bis 4, bei dem in dem Schneideschritt das Stück (5) gemäß einem Schnittwinkel (α) zwischen ungefähr 0° und ungefähr 70° abgeschnitten wird.

6. Verfahren nach Anspruch 5, bei dem der Schnittwinkel (α) zwischen ungefähr 20° und ungefähr 65° ist.

7. Verfahren nach einem der vorhergehenden Ansprüche, bei dem die ringförmige Abstützung (60) eine Rotationsachse X-X aufweist und der Deformationsschritt des zumindest einen Verstärkungselementes (1) die Schritte aufweist:
- Ausbilden des ringförmigen Verstärkungselementes (1') durch Schließen des zumindest einen Verstärkungselementes (1) in einer Schleife um die Rotationsachse X-X, um eine im Wesentlichen zylindrische Oberfläche zu erzeugen, wobei die im Wesentlichen zylindrische Oberfläche auf einer ersten Auflagefläche liegt, die an einem vorgegebenen Punkt davon eine Normale (N₁) aufweist, die sich entlang einer ersten Richtung erstreckt;
- Bewegen der im Wesentlichen zylindrischen Oberfläche von der ersten Auflagefläche hin zu einer zweiten Auflagefläche mit, an einem Punkt, der dem vorgegebenen Punkt an der ersten Auflagefläche entspricht, einer Normalen (N₂), die sich entlang einer zweiten Richtung, die in Bezug auf die erste Richtung geneigt ist, erstreckt.

8. Verfahren nach Anspruch 7, bei dem der Deformationsschritt des zumindest einen Verstärkungselementes (1) ferner aufweist, nach dem Schritt des Ausbildens des ringförmigen Verstärkungselementes (1') und vor dem Bewegungsschritt, den Schritt des Veränderns der radialen Erstreckung der im Wesentlichen zylindrischen Oberfläche.

9. Verfahren nach Anspruch 8, bei dem der Schritt des Veränderns der radialen Erstreckung der im Wesentlichen zylindrischen Oberfläche das radiale Vergrößern der im Wesentlichen zylindrischen Oberfläche aufweist.

10. Verfahren nach einem der Ansprüche 7 bis 9, bei dem an der ersten Auflagefläche die im Wesentlichen zylindrische Oberfläche im Wesentlichen koaxial in Bezug auf die Rotationsachse X-X ist.

11. Verfahren nach Anspruch 10, bei dem an der zweiten Auflagefläche das ringförmige Verstärkungselement (1') eine im Wesentlichen kegelstumpfförmige Oberfläche mit einer Längsachse festlegt, die sich mit der Längsachse der im Wesentlichen zylindrischen Oberfläche deckt.

12. Verfahren nach einem der Ansprüche 7 bis 11, bei dem der Ablagerungsschritt während des Bewegungsschrittes durchgeführt wird.

13. Verfahren nach einem der vorhergehenden Ansprüche, ferner aufweisend die Schritte des Passierens eines Presselementes auf das abgelagerte ringförmige Verstärkungselement (1').

14. Verfahren nach einem der vorhergehenden Ansprüche, bei dem der Ablagerungsbereich (7) ein im Wesentlichen kreisförmiger, ringförmiger Bereich mit einem inneren Radius zwischen ungefähr 200 mm und ungefähr 350 mm ist.

15. Verfahren nach einem der vorhergehenden Ansprüche, bei dem das zumindest eine Verstärkungselement eine Breite zwischen ungefähr 10 mm und ungefähr 50 mm aufweist.

16. Verfahren nach einem der vorhergehenden Ansprüche, bei dem das zumindest ein Verstärkungselement (1) zumindest ein garnartiges Verstärkungselement (6) aufweist, das in ein elastomeres Material eingeschlossen ist.

17. Verfahren nach Anspruch 16, bei dem an dem Ende des Ablagerungsschrittes das zumindest eine garnartige Verstärkungselement (6) ausgerichtet wird, um einen Winkel auszubilden, der größer oder gleich 0° und weniger als 90° zu einer Radialrichtung, die durch sein eigenes radiales inneres Ende verläuft, beträgt.

18. Vorrichtung zum Ablagern eines Verstärkungselementes eines Reifens für Fahrzeugräder auf einer ringförmigen Abstützung (60), aufweisend:
- eine ringförmige Abstützung (60);
- zumindest eine Zuführeinrichtung (20a, 20b) eines Verstärkungselementes (1);
- zumindest eine Ablagerungseinrichtung (50a, 50b), die geeignet ist zum Ausbilden eines ringförmigen Verstärkungselementes (1) und zum Ablagern des ringförmigen Verstärkungselementes (1) an einem Ablagerungsbereich (7), der an der ringförmigen Ablagerung (60) festgelegt wird;
wobei die zumindest eine Ablagerungseinrichtung (50a, 50b) eine Längsachse (X'-X') aufweist, die sich im Wesentlichen mit einer Rotationsachse (X-X) der ringförmigen Abstützung deckt, und aufweist einen Hauptkörper (51, 52) und zumindest ein mobiles Element (510), das dem Hauptkörper (50, 52) zugeordnet ist und betätigbar ist, um das ringförmige Verstärkungselement (1') zu deformieren, um ihm eine Form zu vermitteln, die im Wesentlichen der Form des Ablagerungsbereiches (7) entspricht, wobei das eine Mobilelement (510) eine Vielzahl an rotierbaren Elementen (510) aufweist, die im Wesentlichen in Umfangsrichtung um die Längsachse (X'-X') angeordnet sind.

19. Vorrichtung nach Anspruch 18, bei der die zumindest eine Zuführeinrichtung (20a, 20b) ein kontinuierliches, bandartiges Verstärkungselement (4) entlang einer vorgegebenen Zuführrichtung (F) zuführt.

20. Vorrichtung nach Anspruch 19, die zumindest eine Schneideinrichtung (30a, 30b) zum Zuschneiden von Stücken (5) des kontinuierlichen, bandartigen Verstärkungselementes (4) aufweist.

21. Vorrichtung nach Anspruch 20, aufweisend zumindest eine Montageeinrichtung (40a, 40b), die geeignet ist zum Aufnehmen der Stücke (5) und um es diesen zu gestatten miteinander verbunden zu werden, um das Verstärkungselement (1) zu erhalten.

22. Vorrichtung nach Anspruch 21, bei der die zumindest eine Montageeinrichtung (40a, 40b) ein Förderband aufweist, das entlang einer Förderrichtung (T) beweglich ist und geeignet ist zum sequentiellen Aufnehmen der Stücke (5).

23. Vorrichtung nach Anspruch 22, bei der die Zuführrichtung (F) einen Zuführwinkel (β) von mehr als 0° und weniger als 180° zu der Förderrichtung (T) einnimmt.

24. Vorrichtung nach Anspruch 23, bei der der Zuführwinkel (β) gleich ungefähr 90° - a ist, wobei α der Schneidwinkel der Stücke (5) von dem kontinuierlichen, bandartigen Verstärkungselement (4) ist.

25. Vorrichtung nach einem der Ansprüche 18 bis 24, bei der zumindest eine Ablagerungseinrichtung (50a, 50b) in Bezug auf die ringförmige Abstützung (60) entlang einer Richtung beweglich ist, die sich im Wesentlichen mit einer Rotationsachse X-X der ringförmigen Abstützung (60) deckt.

26. Vorrichtung nach einem der Ansprüche 18 bis 25, ferner aufweisend ein Drückelement, das geeignet ist zum Ausüben eines Druckes auf das ringförmige Verstärkungselement (1'), das an der ringförmigen Abstützung (60) abgelagert ist.

27. Vorrichtung nach einem der Ansprüche 18 bis 26, aufweisend zwei Zuführeinrichtungen (20a, 20b) und zwei Ablagerungseinrichtungen (50a, 50b), die vorgesehen sind, um im Wesentlichen gleichzeitig zwei entsprechende ringförmige Verstärkungselemente (1') an zwei Ablagerungsbereichen (7) abzulagern, die an axial gegenüberliegenden Seiten der ringförmigen Abstützung (60) festgelegt sind.

## Revendications

1. Procédé de fabrication de pneus pour roues de véhicules, comprenant une construction, sur un support toroïdal (60), d'une structure de carcasse (3) comprenant au moins une nappe de carcasse associée, en des bords d'extrémité axialement opposés de celle-ci, avec des structures d'ancrage annulaires (2) ;
dans lequel l'étape de construction de ladite structure de carcasse (3) comprend un formage d'au moins une structure de renforcement, associée fonctionnellement auxdites structures d'ancrage annulaires (2) par dépôt sur ledit support toroïdal (60) d'au moins un élément de renforcement en une zone de dépôt (7) définie sur ledit support toroïdal (60) ;
dans lequel l'étape de dépôt d'au moins un élément de renforcement comprend en séquence les étapes de :
- prévoir au moins un élément de renforcement (1) ayant une longueur déterminée en fonction de la longueur de ladite zone de dépôt (7), dans lequel ledit au moins un élément de renforcement comprend plusieurs élément de renforcement en forme de fil (6) incorporés dans, ou recouvert avec un matériau élastomère et s'étendant obliquement par rapport à une direction d'étendue longitudinale de l'élément de renforcement (1) ;
- déformer ledit au moins un élément de renforcement (1) pour former un élément de renforcement annulaire (1') ayant une forme correspondant sensiblement à la forme de ladite zone de dépôt (7) ;
- déposer l'élément de renforcement annulaire (1') sur ladite zone de dépôt (7).

2. Procédé selon la revendication 1, dans lequel ladite étape de prévoir ledit au moins un élément de renforcement (1) comprend les étapes de :
- découper à la taille une pièce (5) d'un élément continu de renforcement en forme de bande (4) alimenté le long d'une direction prédéterminée d'alimentation (F) ;
- approcher ladite pièce (5) d'une pièce découpée auparavant (5) le long d'une direction d'approche (T) inclinée par rapport à ladite direction d'alimentation (F) ;
- assembler ladite pièce (5) à la pièce découpée auparavant (5) ;
- répéter lesdites étapes de découper, approcher et assembler jusqu'à ce que ledit au moins un élément de renforcement (1) ait une longueur déterminée en fonction de la longueur de ladite zone de dépôt (7).

3. Procédé selon la revendication 2, dans lequel dans ladite étape d'assemblage de ladite pièce (5) est assemblée à la pièce découpée auparavant (5) au niveau des côtés respectifs d'assemblage parallèlement à ladite direction d'alimentation (F).

4. Procédé selon la revendication 3, dans lequel ladite étape d'assemblage comprend l'étape de mettre en chevauchement partiel lesdites pièces (5) au niveau desdits côtés d'assemblage respectifs.

5. Procédé selon l'une quelconque des revendications 2 à 4, dans lequel ladite étape de découpe, ladite pièce (5) est découpée selon un angle de découpe (α) entre environ 0° et environ 70°.

6. Procédé selon la revendication 5, dans lequel ledit angle de découpe (α) est entre environ 20° et environ 65°.

7. Procédé selon l'une quelconque des revendications précédentes, dans lequel ledit support toroïdal (60) a un axe de rotation X-X et ladite étape de déformation dudit au moins un élément de renforcement (1) comprend les étapes de :
- former ledit élément annulaire de renforcement (1') en fermant ledit au moins un élément de renforcement (1) en une boucle autour dudit axe de rotation X-X de manière à générer une surface sensiblement cylindrique, ladite surface sensiblement cylindrique reposant sur une première surface de pose ayant, en un point prédéterminé de celle-ci, une perpendiculaire (N₁) s'étendant le long d'une première direction ;
- déplacer ladite surface sensiblement cylindrique de ladite première surface de pose à une deuxième surface de pose ayant, en un point correspondant audit point prédéterminé sur ladite première surface de pose, une perpendiculaire (N₁) s'étendant le long d'une deuxième direction inclinée par rapport à ladite première direction.

8. Procédé selon la revendication 7, dans lequel l'étape de déformer ledit au moins un élément de renforcement (1) comprend en outre, après ladite première étape de formage dudit élément annulaire de renforcement (1') et avant ladite étape de déplacement, l'étape de changer l'étendue radiale de ladite surface sensiblement cylindrique.

9. Procédé selon la revendication 8, dans lequel ladite étape de changement de l'étendue radiale de ladite surface sensiblement cylindrique comprend une expansion radiale de ladite surface sensiblement cylindrique.

10. Procédé selon l'une des revendications 7 à 9, dans lequel sur ladite première surface de pose ladite surface sensiblement cylindrique est sensiblement coaxiale par rapport audit axe de rotation X-X.

11. Procédé selon la revendication 10, dans lequel sur ladite deuxième surface de pose ledit élément de renfort annulaire (1') définit une surface sensiblement tronconique ayant un axe longitudinal coïncidant avec l'axe longitudinal de ladite surface sensiblement cylindrique.

12. Procédé selon l'une quelconque des revendications 7 à 11, dans lequel ladite étape de dépôt est réalisée pendant ladite étape de déplacement.

13. Procédé selon l'une quelconque des revendications précédentes, comprenant en outre l'étape consistant à faire passer un organe de pression sur ledit élément annulaire de renforcement (1') déposé.

14. Procédé selon l'une quelconque des revendications précédentes, dans lequel ladite zone de dépôt (7) est une zone circulaire annulaire avec un rayon interne compris entre environ 200 mm et environ 350 mm.

15. Procédé selon l'une quelconque des revendications précédentes, dans lequel ledit au moins un élément de renforcement (1) a une largeur comprise entre environ 10 mm et 50 mm.

16. Procédé selon l'une quelconque des revendications précédentes, dans lequel ledit au moins un élément de renforcement (1) comprend au moins un élément de renforcement en forme de fil (6) incorporé dans un matériau élastomère.

17. Procédé selon la revendication 16, dans lequel à la fin de ladite étape de dépôt ledit au moins un élément de renforcement en forme de fil (6) est orienté de manière à former un angle supérieur ou égal à 0° et inférieur à 90° avec une direction radiale traversant sa propre extrémité radialement interne.

18. Appareil (100) pour déposer un élément de renforcement d'un pneu pour roues de véhicules sur un support toroïdal (60), comprenant :
- un support toroïdal (60) ;
- au moins un dispositif d'alimentation (20a, 20b) d'un élément de renforcement (1) ;
- au moins un dispositif de dépôt (50a, 50b) apte à former un élément annulaire de renforcement (1') et pour déposer ledit élément annulaire de renforcement (1') en une zone de dépôt (7) définie sur ledit support toroïdal (60) ;
dans lequel ledit au moins un dispositif de dépôt (50a, 50b) a un axe longitudinal (X'-X') coïncidant sensiblement avec un axe de rotation (X-X) dudit support toroïdal et comprend un corps principal (51, 52) et au moins un élément mobile (510) associé avec ledit corps principal (51, 52) et actionnable pour déformer ledit élément annulaire de renforcement (1') de manière à lui donner une forme correspondant sensiblement à la forme de ladite zone de dépôt (7), ledit au moins un élément mobile (510) comprenant plusieurs élément rotatifs (510) disposés sensiblement circonférentiellement autour dudit axe longitudinal (X'-X').

19. Appareil (100) selon la revendication 18, dans lequel ledit au moins un dispositif d'alimentation (20a, 20b) alimente un élément continu de renforcement en forme de bande (4) le long d'une direction d'alimentation (F) prédéterminée.

20. Appareil (100) selon la revendication 19, comprenant au moins un dispositif de découpe (30a, 30b) pour découper à la taille des pièces (5) dudit élément continu de renforcement en forme de bande (4).

21. Appareil (100) selon la revendication 20, comprenant au moins un dispositif d'assemblage (40a, 40b) apte à recevoir lesdites pièces (5) et à leur permettre d'être assemblées ensemble pour obtenir ledit élément de renforcement (1).

22. Appareil (100) selon la revendication 21, dans lequel ledit au moins un dispositif d'assemblage (40a, 40b) comprend une courroie de transport déplaçable le long d'une direction de transport (T) et apte à recevoir séquentiellement lesdites pièces (5).

23. Appareil (100) selon la revendication 22, dans lequel ladite direction d'alimentation (F) forme un angle d'alimentation (β) supérieur à 0° et inférieur à 180° avec ladite direction de transport (T).

24. Appareil (100) selon la revendication 23, dans lequel ledit angle d'alimentation (β) est égal à environ 90° - α, où α est l'angle de découpe desdites pièces (5) dudit élément continu de renforcement en forme de bande (4).

25. Appareil (100) selon l'une quelconque des revendications 18 à 24, dans lequel ledit au moins un dispositif de dépôt (50a, 50b) est déplaçable par rapport audit support toroïdal (60) le long d'une direction coïncidant sensiblement avec un axe de rotation X-X dudit support toroïdal (60).

26. Appareil (100) selon l'une quelconque des revendications 18 à 25, comprenant en outre un organe de pression apte à exercer une pression sur ledit élément annulaire de renforcement (1') déposé sur ledit support toroïdal (60).

27. Appareil (100) selon l'une quelconque des revendications 18 à 26, comprenant deux dispositifs d'alimentation (20a, 20b) et deux dispositifs de dépôt (50a, 50b) prévus pour déposer sensiblement simultanément deux éléments respectifs de renforcement annulaire (1') en deux zone de dépôt (7) définies sur des côtés axialement opposés dudit support toroïdal (60).
